(19) Europäisches Patentamt
European Patent Office
Office européen des brevets

(11) **EP 3 826 137 A1**

(12) **EUROPEAN PATENT APPLICATION**

(43) Date of publication:
**26.05.2021  Bulletin 2021/21**

(51) Int Cl.:
**H02J 7/35** (2006.01)          **H01M 10/46** (2006.01)
**H02S 40/38** (2014.01)

(21) Application number: **19275125.3**

(22) Date of filing: **19.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **POWER SYSTEM**

(57)    Disclosed is a power system (100) for use on an aerial vehicle, the power system (100) comprising: a first number of photovoltaic cells (101), each having an open circuit voltage; and a second number of battery cells (102), each having an end of charge voltage, wherein the first number of photovoltaic cells (101) multiplied by the open circuit voltage is substantially equal to the second number of battery cells (102) multiplied by an end of charge voltage.

## Fig. 1

**Description**

The present invention relates generally to a power system, and in particular to a solar power system for use on an aerial vehicle. The present invention also relates generally to related methods.

In order to maximise the energy harvest from photovoltaic systems, DC to DC converters called power optimisers are typically used. Power optimisers achieve this effect by individually tuning the performance of the solar panel through maximum power point tracking (MPPT). Power optimisers are especially useful when the performance of the photovoltaic cells is expected to vary over time, for example due to a variation in solar input. The efficiency of power transfer from the photovoltaic cell depends on both the amount of sunlight falling on the solar panels and the electrical characteristics of the load. However, said DC-DC converters add to the cost, complexity and the total weight of the solar power system. This is particularly undesirable in case of power systems intended to provide power to aerial vehicles, such as unmanned aerial vehicles (UAV) and high-altitude long endurance (HALE) vehicles. As such, there exists a need for maximising, or at least increasing, the energy harvest from a solar system without increasing the weight of the system.

It is an aim of example embodiments to at least partially overcome or avoid one or more disadvantages of the prior art, described above or elsewhere, or to at least provide an improved or even an alternative system to those already in existence.

According to the present invention there is provided an apparatus and method as set forth in the appended claims. Other features of the invention will be apparent from the dependent claims, and the description which follows.

According to an aspect of the invention, there is provided a power system for use on an aerial vehicle, the power system comprising: a first number of photovoltaic cells, each having an open circuit voltage; and a second number of battery cells, each having an end of charge voltage, wherein the first number of photovoltaic cells multiplied by the open circuit voltage is substantially equal to the second number of battery cells multiplied by an end of charge voltage. Thus, the need to employ a dedicated maximum power point tracking controller is eliminated, thereby reducing the mass, complexity, and cost of the power system.

The open circuit voltage may be substantially equal to 2.7V. Thus, the voltage can be matched the current-voltage characteristics of the photovoltaic cells to maximise energy harvest therefrom.

The end of charge voltage may be substantially equal to 4.4V. Thus, the voltage can be matched the current-voltage characteristics of the photovoltaic cells to maximise energy harvest therefrom.

The battery cells may comprise lithium-ion battery cells. Thus, the mass of the power system can be reduced, thereby reducing the total mass of the aerial vehicle.

The aerial vehicle may comprise an unmanned aerial vehicle. Thus, in use, the power system does not require user attention.

The aerial vehicle may comprise a high-altitude long endurance vehicle. Thus, the system can operate under various conditions, such as at various altitudes.

According to another aspect of the invention, there is provided a method of battery matching for a power system for use on an aerial vehicle, the method comprising the steps of selecting a first number of photovoltaic cells, each cell having an open circuit voltage, such that the first number of photovoltaic cells multiplied by the open circuit voltage is substantially equal to a second number of battery cells, each cell having an end of charge voltage, multiplied by the end of charge voltage.

The open circuit voltage may be substantially equal to 2.7V. Thus, the voltage can be matched the current-voltage characteristics of the photovoltaic cells to maximise energy harvest therefrom.

The end of charge voltage may be substantially equal to 4.4V. Thus, the voltage can be matched the current-voltage characteristics of the photovoltaic cells to maximise energy harvest therefrom.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic Figures in which:

Figure 1 schematically depicts a power system for use on an aerial vehicle according to an example embodiment;

Figure 2a depicts the current-voltage characteristic of a photovoltaic cell for use with the invention;

Figure 2b depicts the current-voltage characteristic of a battery cell for use with the invention;

Figure 3 depicts example methodology according to an example embodiment.

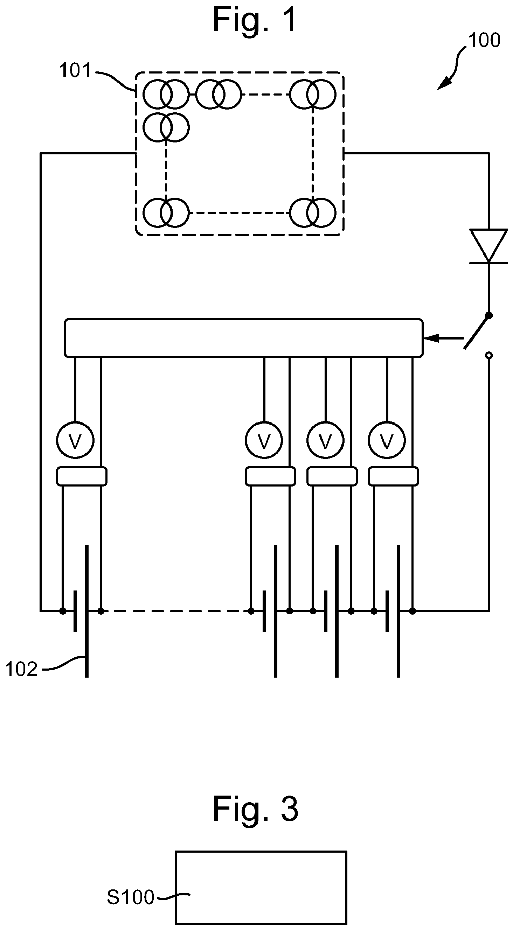

Figure 1 schematically depicts a power system for use on an aerial vehicle. The aerial vehicle could be any vehicle capable of carrying or otherwise being connected to the power system. The vehicle could be a manned vehicle, or an unmanned vehicle. In one particular example the vehicle is a high-altitude long endurance (HALE) aircraft.

Referring to Figure 1, the power system 100 comprises a first number of photovoltaic cells 101, each of the photovoltaic cells having an open circuit voltage, and a second number of battery cells 102, each of the battery cells having an end of charge voltage. The first number of photovoltaic cells 101 multiplied by the open circuit voltage is substantially equal to the second number of battery cells 102 multiplied by the end of charge voltage. The reason for said matching is to, during charging, allow the battery cells 102 to define the current produced by the photovoltaic cells 101 such that the battery cells 102 can efficiently use the power available from the photovoltaic cells 101 through their charge cycle, whilst also preventing the photovoltaic cells 101 from ever overcharging the battery cells 102.

The first number of photovoltaic cells 101 and the second number of battery cells 102 may be connected in parallel, in series, or using a combination of both parallel and series connections. The first number of photovoltaic cells 101 multiplied by the open circuit voltage is substantially equal to the second number of battery cells 102 multiplied by the end of charge voltage; that is, there exists a small degree of tolerance for a variation between the two products. For example, and strictly by way of example only, for a 100V system, the degree of tolerance is +/-3%.

Due to the intended use of the power system 100 - that is, for aerial vehicles - mass restrictions apply, since it is desirable to minimise the weight of the vehicle. Ideally, the power system 100 should be light, so that performance of the aerial vehicle is not affected negatively by additional mass. This is of particular importance in case of HALE vehicles, where performance of the system is critically dependent on mass. Thus, it is preferred that the battery cells 102 are light; for example, lithium-ion batteries, or similar, are preferred over heavier batteries such as lead-acid batteries.

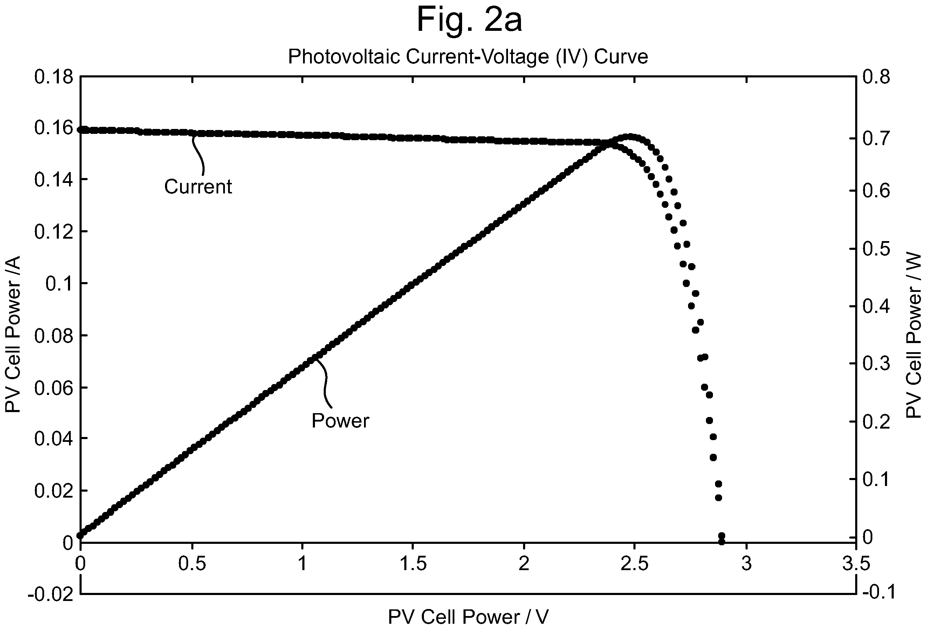

Figure 2a depicts the current-voltage characteristic of a photovoltaic cell for use with the invention. In detail, Fig. 2a shows the maximum current that can be supplied. As the solar input reduces - for example in the morning and in the evening, when the sun is lower - the current and power reduce at the same nominal voltage points. In the example of Fig. 2a, when the photovoltaic cell is strapped to a voltage of 2.7V, it can produce no charging current. For the battery cell, this voltage would ideally be matched to the end of charge voltage of the cell - 4.4V. By building a battery of cells in series, and a string of photovoltaic cells in series, it can be seen that there are a number of combinations where this condition can be met, defined by

$$\text{Number of PV cells x } V_{oc} = \text{Number of battery cells x } V_{EOC}$$

Where $V_{oc}$ = the open circuit voltage of the photovoltaic cell, and $V_{EOC}$ = the end of charge voltage of the battery cell.

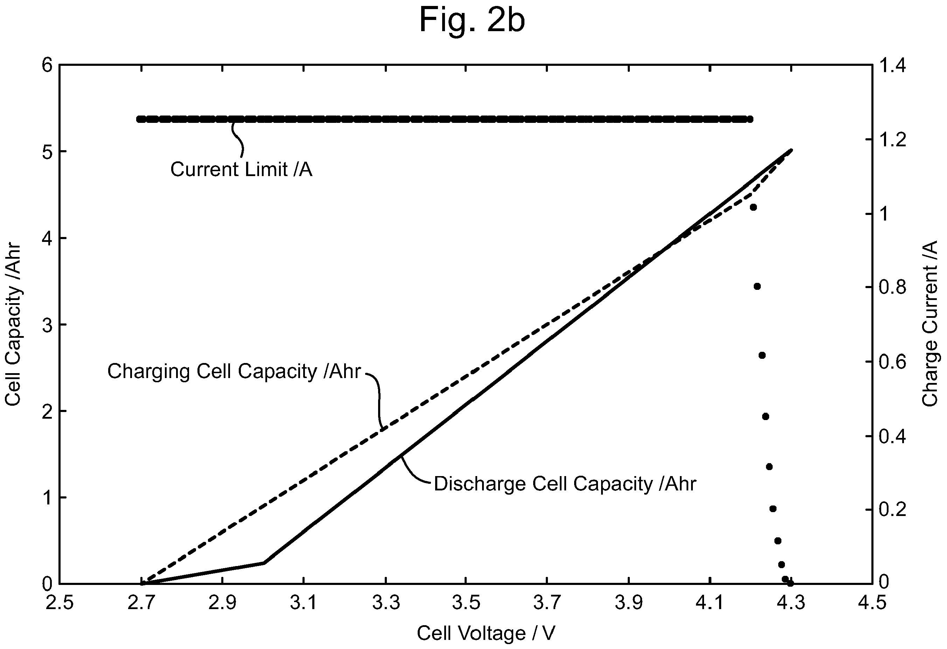

Figure 2b depicts the current-voltage characteristic of a battery cell for use with the invention. Lithium-ion battery cells typically have a voltage range of 2.7V to 4.4V; however, some cells can be discharged to 2.5V, and others charged to 4.5V. This voltage range can be matched to the IV characteristics of the photovoltaic cells around the peak-power point seen at 2.5V. If the 4.4 end of charge voltage level is set to the maximum voltage of the photovoltaic cell, significant energy is wasted at voltages above the peak-power point.

Thus, in order to maximise the energy harvest from photovoltaic systems, the power system 100 matches the number of series photovoltaic cells 101 with the number of series battery cells 102 such that the end of discharge to end of charge voltage range of the battery straddles the peak-power point. The standard approach to charging is to control the charging power supply and/or loads to maintain the array of photovoltaic cells at its peak-power point. However, such approach is more complex than the power system 100 described herein, as more components are required in terms of both hardware and software. Eliminating the need for having a dedicated maximum power point tracking controller has significant benefits for mass (and hence performance of the aerial vehicle), simplicity (and hence reliability and certification) and cost.

Figure 3 describes general methodology associated with recently described embodiments. The method is for battery matching for a power system for use on an aerial vehicle. The method comprises the step of selecting a first number of photovoltaic cells, each cell having an open circuit voltage, such that the first number of photovoltaic cells multiplied by the open circuit voltage is substantially equal to a second number of battery cells, each cell having an end of charge voltage, multiplied by the end of charge voltage S100.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A power system for use on an aerial vehicle, the power system comprising:

   a first number of photovoltaic cells, each having an open circuit voltage; and
   a second number of battery cells, each having an end of charge voltage,
   wherein the first number of photovoltaic cells multiplied by the open circuit voltage is substantially equal to the second number of battery cells multiplied by an end of charge voltage.

2. The power system of claim 1, wherein the open circuit voltage is substantially equal to 2.7V.

3. The power system of any preceding claim, wherein the end of charge voltage is substantially equal to 4.4V.

4. The power system of any preceding claim, wherein the battery cells comprise lithium-ion battery cells.

5. The power system of any preceding claim, wherein the aerial vehicle comprises an unmanned aerial vehicle.

6. The power system of any preceding claim, wherein the aerial vehicle comprises a high-altitude long endurance vehicle.

7. A method of battery matching for a power system for use on an aerial vehicle, the method comprising the steps of: selecting a first number of photovoltaic cells, each cell having an open circuit voltage, such that the first number of photovoltaic cells multiplied by the open circuit voltage is substantially equal to a second number of battery cells, each cell having an end of charge voltage, multiplied by the end of charge voltage.

8. The method of claim 7, wherein the open circuit voltage is substantially equal to 2.8V.

9. The method of any preceding claim, wherein the end of charge voltage is substantially equal to 4.4V.

# Fig. 1

# Fig. 3

# Fig. 2a

## Photovoltaic Current-Voltage (IV) Curve

# Fig. 2b

EP 3 826 137 A1

Europäisches
Patentamt

European
Patent Office

Office européen
des brevets

**EUROPEAN SEARCH REPORT**

Application Number

EP 19 27 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/249047 A1 (KELLY NELSON A [US] ET AL) 4 October 2012 (2012-10-04) * paragraphs [0002], [0022], [0045], [0048], [0050]; figure 6 * | 1-9 | INV. H02J7/35 H01M10/46 H02S40/38 |
| X | AU 2008 202 121 A1 (NIEN MADE ENTPR CO LTD [TW]) 3 December 2009 (2009-12-03) * figure 1 * * page 5, line 3 * * page 6, lines 25-29 * | 1-9 | |
| X | EP 2 355 300 A2 (SANYO ELECTRIC CO [JP]) 10 August 2011 (2011-08-10) * paragraphs [0001], [0042], [0044] * | 1-9 | |

TECHNICAL FIELDS
SEARCHED      (IPC)

H01M
H02S
H01L
H02J

The present search report has been drawn up for all claims

| Place of search | Date of completion of the search | Examiner |
|---|---|---|
| Munich | 3 March 2020 | Varela Fraile, Pablo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 27 5125

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2020

| Patent document cited in search report | | Publication date | Patent family member(s) | | Publication date |
|---|---|---|---|---|---|
| US 2012249047 | A1 | 04-10-2012 | NONE | | |
| AU 2008202121 | A1 | 03-12-2009 | NONE | | |
| EP 2355300 | A2 | 10-08-2011 | CN | 102142702 A | 03-08-2011 |
| | | | EP | 2355300 A2 | 10-08-2011 |
| | | | JP | 2011155820 A | 11-08-2011 |
| | | | US | 2011181233 A1 | 28-07-2011 |

EPO FORM P0459

For more details about this annex : see Official Journal of the European Patent Office, No. 12/82